# EUROPEAN PATENT APPLICATION

(11) **EP 2 993 830 A1**
(43) Date of publication of application: **09.03.2016**
(21) Application number: 14788775.6
(22) Date of filing: 23.05.2014
(51) Int. Cl.: H04L 12/28

(54) **HOME NETWORK COMMUNICATION METHOD AND SYSTEM, PLC DEVICE AND STORAGE MEDIUM**

(30) Priority: 16.08.2013 CN 201310360285
(71) Applicant: ZTE Corporation, Shenzhen, Guangdong 518057 (CN)
(72) Inventor: ZHAO, Jiawei, Shenzhen Guangdong 518057 (CN); XU, Aijun, Shenzhen Guangdong 518057 (CN)
(74) Representative: Tischner, Oliver
(86) International application number: PCT/CN2014/078320
(87) International publication number: WO 2014/173354

(57) **Abstract**

An embodiment of the disclosure discloses a communication method for a home network, which includes: identifying received Internet Protocol Television (IPTV) service data and/or Internet access service data sent from a Home gateway (HG), and sending the identified IPTV service data and/or Internet access service data to more than one piece of Power Line Communication (PLC) equipment; and after IPTV service data and/or Internet access service data sent from the more than one piece of PLC equipment is received, sending the IPTV service data to an Internet Television (iTV) interface of the HG and sending the Internet access service data to a Local Area Network (LAN) interface of the HG according to (an) Identity/Identities (ID) of the IPTV service data and/or the Internet access service data. The disclosure further discloses PLC equipment and a communication system for a home network. According to the technical solutions of the disclosure, the amount of the PLC equipment is reduced, the communication cost of the home network is lowered, and in addition, home networking flexibility and usability are improved.

## Description

### TECHNICAL FIELD

The disclosure relates to the technology of home network communications, in particular to a communication method and system for a home network, Power Line Communication (PLC) equipment and a storage medium.

### BACKGROUND

PLC is to convert any power socket under an ammeter loop into a network interface for further interconnection with the Ethernet and access to the Internet by utilizing a power line for transmitting current as a communication carrier. In a family without an embedded network cable, an Internet Protocol Television (IPTV) service or an Internet access service may be born by a PLC technology.

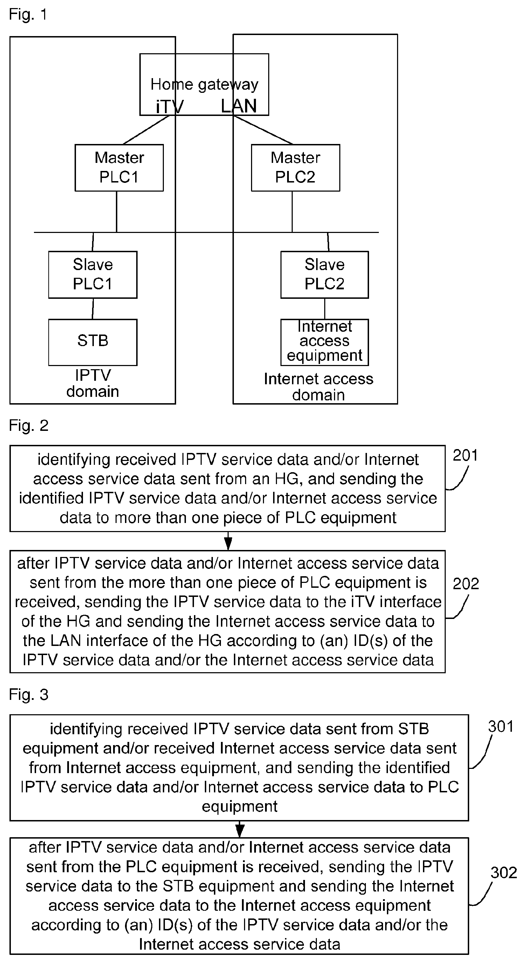

At present, an IPTV service provided for a home user requires an independent channel for transmission, that is, the user may normally use the IPTV service only after an Internet Protocol (IP) Set Top Box (STB) accesses a specified Internet Television (iTV) interface on a Home gateway (HG) in a wired or wireless manner. Internet access requires Internet access equipment such as a notebook to access another specific network interface on the HG to further use an Internet access service. However, when the user needs to simultaneously watch an IPTV program and surf the Internet through PLC equipment, home networking according to a structure shown in Fig. 1 is required, as shown in Fig. 1, networking requires at least four pieces of PLC equipment, wherein two pieces of PLC equipment are master PLC equipment, the master PLC equipment is PLC equipment accessing the HG, and moreover, the master PLC equipment is connected with the iTV interface of the HG and any other Internet access Local Area Network (LAN) interface of the HG respectively; and the other two pieces of PLC equipment are slave PLC equipment, one piece of slave PLC equipment is connected with STB equipment, and the other piece of slave PLC equipment is connected with Internet access equipment. In case of home networking according to the structure shown in Fig. 1, the PLC equipment is physically divided into at least two independent PLC domains, one being an IPTV domain and the other being an Internet access domain. The IPTV domain is isolated from the Internet access domain through a physical channel. Such a networking manner has shortcomings that more PLC equipment is required, so that resources are wasted; and in addition, the networking manner is more complex, failure rate is high and the equipment is difficult to manage.

### SUMMARY

In order to solve the technical problem, embodiments of the disclosure provides a communication method and system for a home network, PLC equipment and a storage medium, which can reduce the amount of the PLC equipment, lower communication cost of the home network and simultaneously improve home networking flexibility and usability.

The technical solutions of the embodiment of the disclosure are implemented as follows.

A communication method for a home network is provided, which includes:
identifying received IPTV service data and/or Internet access service data, and sending the identified IPTV service data and/or Internet access service data to more than one piece of PLC equipment; and
after IPTV service data and/or Internet access service data sent from the more than one piece of PLC equipment is received, sending the IPTV service data to an iTV interface of an HG and sending the Internet access service data to an LAN interface of the HG according to (an) Identity/Identities (ID) of the IPTV service data and/or the Internet access service data.

Before identifying the received IPTV service data and/or Internet access service data sent from the HG, the method may further include:
configuring a working mode of a first LAN interface into an IPTV mode, and configuring a first ID to the IPTV mode; and
configuring a working mode of a second LAN interface into a default mode; or, configuring the working mode of the second LAN interface into an LAN mode, and configuring a second ID to the LAN mode.

The identifying the received IPTV service data and/or Internet access service data sent from the HG may include:
receiving the IPTV service data sent from the iTV interface of the HG through the first LAN interface, and receiving the Internet access service data sent from the LAN interface of the HG through the second LAN interface;
when the working mode of the first LAN interface is determined to be the IPTV mode, encapsulating the first ID in the IPTV service data; and
when the working mode of the second LAN interface is determined to be the default mode, keeping the Internet access service data unchanged; or, when the working mode of the second LAN interface is determined to be the LAN mode, encapsulating the second ID in the Internet access service data.

The sending the IPTV service data to the iTV interface of the HG and sending the Internet access service data to the LAN interface of the HG according to the ID(s) of the IPTV service data and/or the Internet access service data may include:
when the IPTV service data is analyzed and the IPTV service data is determined to contain the first ID, deleting the first ID in the IPTV service data, and sending the IPTV service data to the iTV interface of the HG; and
when the Internet access service data is analyzed and the Internet access service data is determined not to contain the first ID, sending the Internet access service data to the LAN interface of the HG; or, when the Internet access service data is analyzed and the Internet access service data is determined to contain the second ID, deleting the second ID in the Internet access service data, and sending the Internet access service data to the LAN interface of the HG.

A communication method for a home network is provided, which includes:
identifying received IPTV service data sent from STB equipment and/or received Internet access service data sent from Internet access equipment, and sending the identified IPTV service data and/or Internet access service data to PLC equipment; and
after IPTV service data and/or Internet access service data sent from the PLC equipment is received, sending the IPTV service data to the STB equipment and sending the Internet access service data to the Internet access equipment according to (an) ID(s) of the IPTV service data and/or the Internet access service data.

Before identifying the received IPTV service data sent from the STB equipment and/or the received Internet access service data sent from the Internet access equipment, the method may further include:
configuring a working mode of an STB equipment interface into an IPTV mode, and configuring a first ID to the IPTV mode; and
configuring a working mode of an Internet access equipment interface into a default mode; or, configuring the working mode of the Internet access equipment interface into an LAN mode, and configuring a second ID to the LAN mode.

The identifying the received IPTV service data sent from the STB equipment and/or the received Internet access service data sent from the Internet access equipment may include:
receiving the IPTV service data sent from the STB equipment through the STB equipment interface, and receiving the Internet access service data sent from the Internet access equipment through the Internet access equipment interface;
when the working mode of the STB equipment interface is determined to be the IPTV mode, encapsulating the first ID in the IPTV service data; and
when the working mode of the Internet access equipment interface is determined to be the default mode, keeping the Internet access service data unchanged; or, when the working mode of the Internet access equipment interface is determined to be the LAN mode, encapsulating the second ID in the Internet access service data.

The sending the IPTV service data to the STB equipment and sending the Internet access service data to the Internet access equipment according to the ID(s) of the IPTV service data and/or the Internet access service data may include:
when the IPTV service data is analyzed and the IPTV service data is determined to contain the first ID, deleting the first ID in the IPTV service data, and sending the IPTV service data to the STB equipment; and
when the Internet access service data is analyzed and the Internet access service data is determined not to contain the first ID, sending the Internet access service data to the Internet access equipment; or, when the Internet access service data is analyzed and the Internet access service data is determined to contain the second ID, deleting the second ID in the Internet access service data, and sending the Internet access service data to the Internet access equipment.

PLC equipment is provided, which includes: a first receiving unit, an identification unit, a first sending unit, a second receiving unit and a second sending unit, wherein
the first receiving unit is configured to receive IPTV service data and/or Internet access service data sent from an HG;
the identification unit is configured to identify the IPTV service data and/or the Internet access service data;
the first sending unit is configured to send the identified IPTV service data and/or Internet access service data to more than one piece of slave PLC equipment;
the second receiving unit is configured to receive IPTV service data and/or Internet access service data sent from the more than one piece of slave PLC equipment; and
the second sending unit is configured to send the IPTV service data to an iTV interface of the HG and send the Internet access service data to an LAN interface of the HG according to (an) ID(s) of the IPTV service data and/or the Internet access service data.

The PLC equipment may further include: a mode configuration unit and an ID configuration unit, wherein
the mode configuration unit is configured to configure a working mode of a first LAN interface into an IPTV mode, and
configure a working mode of a second LAN interface into a default mode, or configure the working mode of the second LAN interface into an LAN mode; and
the ID configuration unit is configured to configure a first ID to the IPTV mode when the working mode of the first LAN interface is configured into the IPTV mode, and
configure a second ID to the LAN mode when the working mode of the second LAN interface is configured into the LAN mode.

The first receiving unit may be further configured to receive the IPTV service data sent from the iTV interface of the HG through the first LAN interface, and receive the Internet access service data sent from the LAN interface of the HG through the second LAN interface; and
the identification unit may be further configured to encapsulate the first ID in the IPTV service data when the working mode of the first LAN interface is determined to be the IPTV mode, and
keep the Internet access service data unchanged when the working mode of the second LAN interface is determined to be the default mode, or encapsulate the second ID in the Internet access service data when the working mode of the second LAN interface is determined to be the LAN mode.

The PLC equipment may further include: an analysis unit and a deletion unit, wherein
the analysis unit is configured to send a first deletion instruction to the deletion unit when the IPTV service data is analyzed and the IPTV service data is determined to contain the first ID, and
trigger the second sending unit when the Internet access service data is analyzed and the Internet access service data is determined not to contain the first ID, or send a second deletion instruction to the deletion unit when the Internet access service data is analyzed and the Internet access service data is determined to contain the second ID;
the deletion unit is configured to delete the first ID in the IPTV service data after receiving the first deletion instruction from the analysis unit, and
delete the second ID in the Internet access service data after receiving the second deletion instruction from the analysis unit; and
the second sending unit may be further configured to send the IPTV service data from which the first ID is deleted to the iTV interface of the HG, and
send the Internet access service data to the LAN interface of the HG after receiving the triggering of the analysis unit, or send the Internet access service data from which the second ID is deleted to the LAN interface of the HG.

PLC equipment is provided, which includes: a first receiving unit, an identification unit, a first sending unit, a second receiving unit and a second sending unit, wherein
the first receiving unit is configured to receive IPTV service data sent from STB equipment and/or Internet access service data sent from Internet access equipment;
the identification unit is configured to identify the IPTV service data and/or the Internet access service data;
the first sending unit is configured to send the identified IPTV service data and/or Internet access service data to master PLC equipment;
the second receiving unit is configured to receive IPTV service data and/or Internet access service data sent from the master PLC equipment; and
the second sending unit is configured to send the IPTV service data to the STB equipment and send the Internet access service data to the Internet access equipment according to (an) ID(s) of the IPTV service data and/or the Internet access service data.

The PLC equipment may further include: a mode configuration unit and an ID configuration unit, wherein
the mode configuration unit is configured to configure a working mode of an STB equipment interface into an IPTV mode, and
configure a working mode of an Internet access equipment interface into a default mode, or configure the working mode of the Internet access equipment interface into an LAN mode; and
the ID configuration unit is configured to configure a first ID to the IPTV mode when the working mode of the STB equipment interface is configured into the IPTV mode, and
configure a second ID to the LAN mode when the working mode of the Internet access equipment interface is configured into the LAN mode.

The first receiving unit may be further configured to receive the IPTV service data sent from the STB equipment through the STB equipment interface, and receive the Internet access service data sent from the Internet access equipment through the Internet access equipment interface; and
the identification unit may be further configured to encapsulate the first ID in the IPTV service data when the working mode of the STB equipment interface is determined to be the IPTV mode, and
keep the Internet access service data unchanged when the working mode of the Internet access equipment interface is determined to be the default mode, or encapsulate the second ID in the Internet access service data when the working mode of the Internet access equipment interface is determined to be the LAN mode.

The PLC equipment may further include: an analysis unit and a deletion unit, wherein
the analysis unit is configured to send a first deletion instruction to the deletion unit when the IPTV service data is analyzed and the IPTV service data is determined to contain the first ID, and
trigger the second sending unit when the Internet access service data is analyzed and the Internet access service data is determined not to contain the first ID, or send a second deletion instruction to the deletion unit when the Internet access service data is analyzed and the Internet access service data is determined to contain the second ID;
the deletion unit is configured to delete the first ID in the IPTV service data after receiving the first deletion instruction from the analysis unit, and
delete the second ID in the Internet access service data after receiving the second deletion instruction from the analysis unit; and
the second sending unit may be further configured to send the IPTV service data from which the first ID is deleted to the iTV interface of the HG, and
send the Internet access service data to the LAN interface of the HG after receiving the triggering of the analysis unit, or send the Internet access service data from which the second ID is deleted to the LAN interface of the HG.

A communication system for a home network is provided, which includes any abovementioned PLC equipment.

A storage medium is provided, in which a computer program is stored, wherein the computer program is configured to execute the abovementioned communication methods for the home network.

According to the communication methods and system for the home network and the PLC equipment in the embodiment of the disclosure, the received IPTV service data and/or Internet access service data sent from the HG is identified, and the identified IPTV service data and/or Internet access service data is sent to the more than one piece of PLC equipment; and after the IPTV service data and/or Internet access service data sent from the more than one piece of PLC equipment is received, the IPTV service data is sent to the iTV interface of the HG and the Internet access service data is sent to the LAN interface of the HG according to the ID(s) of the IPTV service data and/or the Internet access service data. Therefore, the IPTV service data and/or the Internet access service data in the same physical channel can be logically separated by identifying the IPTV service data and/or the Internet access service data, the amount of the PLC equipment is further reduced, the communication cost of the home network is lowered, and in addition, the home networking flexibility and usability are improved.

### BRIEF DESCRIPTION OF THE DRAWINGS

Fig. 1 is a structure diagram of networking of a home network according to an existing technology;
Fig. 2 is a first flowchart of implementation of a communication method for a home network according to an embodiment of the disclosure;
Fig. 3 is a second flowchart of implementation of a communication method for a home network according to an embodiment of the disclosure;
Fig. 4 is a third flowchart of implementation of a communication method for a home network according to an embodiment of the disclosure;
Fig. 5 is a fourth flowchart of implementation of a communication method for a home network according to an embodiment of the disclosure;
Fig. 6 is a first structure diagram of PLC equipment according to an embodiment of the disclosure;
Fig. 7 is a second structure diagram of PLC equipment according to an embodiment of the disclosure; and
Fig. 8 is a structure diagram of a communication system for a home network according to an embodiment of the disclosure.

### DETAILED DESCRIPTION

In order to make characteristics and technical contents of the disclosure understood in more detail, the implementation of the disclosure is described below with reference to the drawings in detail, and the drawings are only adopted for description as a reference and not intended to limit the disclosure.

The embodiment of the disclosure provides a communication method executed by master PLC equipment for a home network, as shown in Fig. 2, the method includes the following steps:
Step 201: identifying received IPTV service data and/or Internet access service data sent from an HG, and sending the identified IPTV service data and/or Internet access service data to more than one piece of PLC equipment.

Here, the more than one piece of PLC equipment is more than one slave PLC equipment. The master PLC equipment identifies the IPTV service data and/or Internet access service data sent from the HG, and then sends the identified IPTV service data and/or Internet access service data to the more than one slave PLC equipment.

Preferably, before the step of identifying the received IPTV service data and/or Internet access service data sent from the HG, the method further includes:
configuring a working mode of a first LAN interface into an IPTV mode, and configuring a first ID (Identity) to the IPTV mode; and
configuring a working mode of a second LAN interface into a default mode; or, configuring the working mode of the second LAN interface into an LAN mode, and configuring a second ID to the LAN mode.

Here, the working modes may be configured through a local page of the master PLC equipment, or the working modes may be configured through an external hardware device of the PLC equipment, or the working modes may be configured through a remote network manager. The first LAN interface and the second LAN interface are two interfaces of the master PLC equipment, and receive the IPTV service data and/or Internet access service data sent from the HG respectively.

Preferably, the first ID configured to the IPTV mode may be a set Virtual Local Area Network Identity (VLAN ID).

Preferably, the step of identifying the received IPTV service data and/or Internet access service data sent from the HG includes:
receiving the IPTV service data sent from an iTV interface of the HG through the first LAN interface, and receiving the Internet access service data sent from an LAN interface of the HG through the second LAN interface;
when the working mode of the first LAN interface is determined to be the IPTV mode, encapsulating the first ID in the IPTV service data; and
when the working mode of the second LAN interface is determined to be the default mode, keeping the Internet access service data unchanged; or, when the working mode of the second LAN interface is determined to be the LAN mode, encapsulating the second ID in the Internet access service data.

In the embodiment, after the IPTV service data and/or the Internet access service data is identified, the IPTV service data and/or the Internet access service data is logically separated, and a mixed mode is physically adopted, that is, the IPTV service data and/or the Internet access service data may be transmitted on the same power line, and is independently transmitted without mutual influence.

Step 202: after IPTV service data and/or Internet access service data sent from the more than one piece of PLC equipment is received, sending the IPTV service data to the iTV interface of the HG and sending the Internet access service data to the LAN interface of the HG according to (an) ID(s) of the IPTV service data and/or the Internet access service data.

Preferably, the step of sending the IPTV service data to the iTV interface of the HG and sending the Internet access service data to the LAN interface of the HG according to the ID(s) of the IPTV service data and/or the Internet access service data includes:
when the IPTV service data is analyzed and the IPTV service data is determined to contain the first ID, deleting the first ID in the IPTV service data, and sending the IPTV service data to the iTV interface of the HG; and
when the Internet access service data is analyzed and the Internet access service data is determined not to contain the first ID, sending the Internet access service data to the LAN interface of the HG; or, when the Internet access service data is analyzed and the Internet access service data is determined to contain the second ID, deleting the second ID in the Internet access service data, and sending the Internet access service data to the LAN interface of the HG.

There is no specific sequence for the execution of Step 201 and Step 202 in the embodiment, and Step 201 and Step 202 may be executed concurrently.

The embodiment of the disclosure provides a communication method executed by slave PLC equipment for a home network, as shown in Fig. 3, the method includes the following steps:
Step 301: identifying received IPTV service data sent from STB equipment and/or received Internet access service data sent from Internet access equipment, and sending the identified IPTV service data and/or Internet access service data to PLC equipment.

Here, the PLC equipment is master PLC equipment, and the slave PLC equipment identifies the IPTV service data sent from the STB equipment and/or the Internet access service data sent from the Internet access equipment, and sends the identified IPTV service data and/or Internet access service data to the master PLC equipment.

Preferably, before the step of identifying the received IPTV service data sent from the STB equipment and/or the received Internet access service data sent from the Internet access equipment, the method further includes:
configuring a working mode of an STB equipment interface into an IPTV mode, and configuring a first ID to the IPTV mode; and
configuring a working mode of an Internet access equipment interface into a default mode; or, configuring the working mode of the Internet access equipment interface into an LAN mode, and configuring a second ID to the LAN mode.

Here, the working modes may be configured through a local page of the slave PLC equipment, or the working modes may be configured through an external hardware device of the PLC equipment, or the working modes may be configured through a remote network manager.

Preferably, the first ID configured to the IPTV mode may be a set VLAN ID.

Preferably, the step of identifying the received IPTV service data sent from the STB equipment and/or the received Internet access service data sent from the Internet access equipment includes:
receiving the IPTV service data sent from the STB equipment through the STB equipment interface, and receiving the Internet access service data sent from the Internet access equipment through the Internet access equipment interface;
when the working mode of the STB equipment interface is determined to be the IPTV mode, encapsulating the first ID in the IPTV service data; and
when the working mode of the Internet access equipment interface is determined to be the default mode, keeping the Internet access service data unchanged; or, when the working mode of the Internet access equipment interface is determined to be the LAN mode, encapsulating the second ID in the Internet access service data.

Step 302: after IPTV service data and/or Internet access service data sent from the PLC equipment is received, sending the IPTV service data to the STB equipment and sending the Internet access service data to the Internet access equipment according to (an) ID(s) of the IPTV service data and/or the Internet access service data.

Preferably, the step of sending the IPTV service data to the STB equipment and sending the Internet access service data to the Internet access equipment according to the ID(s) of the IPTV service data and/or the Internet access service data includes:
when the IPTV service data is analyzed and the IPTV service data is determined to contain the first ID, deleting the first ID in the IPTV service data, and sending the IPTV service data to the STB equipment; and
when the Internet access service data is analyzed and the Internet access service data is determined not to contain the first ID, sending the Internet access service data to the Internet access equipment; or, when the Internet access service data is analyzed and the Internet access service data is determined to contain the second ID, deleting the second ID in the Internet access service data, and sending the Internet access service data to the Internet access equipment.

The communication method for the home network is further described below with reference to specific embodiments in detail.

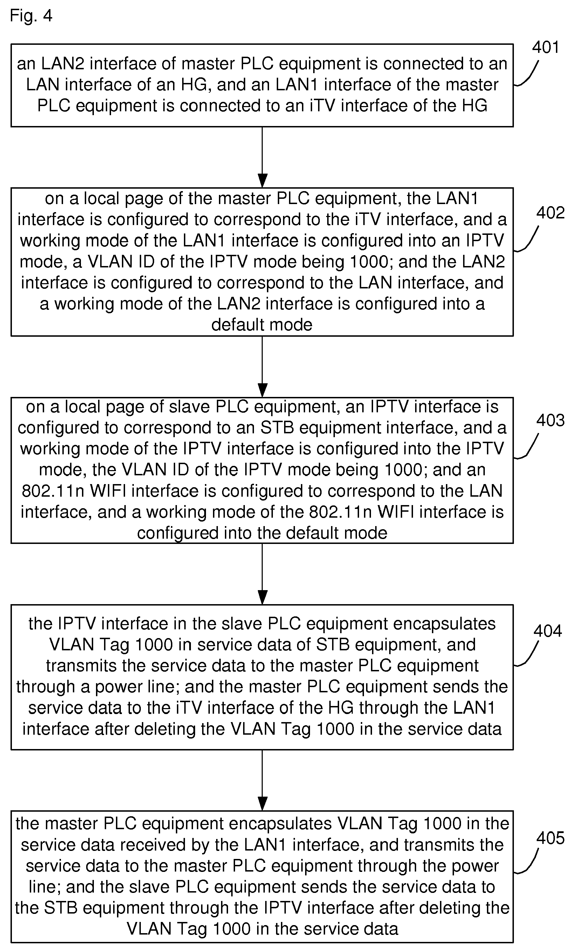

The slave PLC equipment supports the STB equipment interface and the Internet access equipment interface, and preferably, the STB equipment interface is an IPTV interface, and the Internet access equipment interface is an 802.11 n Wireless Fidelity (WIFI) interface; and therefore, the STB equipment may access to the IPTV interface of the slave PLC equipment, and a tablet computer may access the 802.11 n WIFI interface. The master PLC equipment includes the first LAN interface and the second LAN interface, the first LAN is called an LAN1 interface and the second LAN interface is called an LAN2 interface; and the LAN1 interface accesses the iTV interface of the HG, and the LAN2 interface accesses the LAN interface of the HG. As shown in Fig. 4, the communication method for the home network in the embodiment of the disclosure includes the following preferred implementation steps:
Step 401: the LAN2 interface of the master PLC equipment is connected to the LAN interface of the HG, and the LAN1 interface of the master PLC equipment is connected to the iTV interface of the HG.
Step 402: on the local page of the master PLC equipment, the LAN1 interface is configured to correspond to the iTV interface, and a working mode of the LAN1 interface is configured into the IPTV mode, the VLAN ID of the IPTV mode being 1000; and the LAN2 interface is configured to correspond to the LAN interface, and a working mode of the LAN2 interface is configured into the default mode.

Preferably, a configured content further includes: the configuration of the interfaces of the master PLC equipment and the slave PLC equipment into mixed interfaces, the mixed interfaces supporting the mixed transmission of Tag 1000 and untag service data.

Step 403: on the local page of the slave PLC equipment, the IPTV interface is configured to correspond to the STB equipment interface, and the working mode of the IPTV interface is configured into the IPTV mode, the VLAN ID of the IPTV mode being 1000; and the 802.11 n WIFI interface is configured to correspond to the LAN interface, and a working mode of the 802.11 n WIFI interface is configured into the default mode.

Preferably, a configured content further includes: the configuration of the interfaces of the master PLC equipment and the slave PLC equipment into mixed interfaces, the mixed interfaces supporting the mixed transmission of Tag 1000 and untag service data.

Step 404: the IPTV interface in the slave PLC equipment encapsulates VLAN Tag 1000 in the service data sent from the STB equipment, and transmits the service data to the master PLC equipment through a power line; and the master PLC equipment sends the service data to the iTV interface of the HG through the LAN1 interface after deleting the VLAN Tag 1000 in the service data.

Step 405: the master PLC equipment encapsulates VLAN Tag 1000 in the service data received from the LAN1 interface, and transmits the service data to the slave PLC equipment through the power line; and the slave PLC equipment sends the service data to the STB equipment through the IPTV interface after deleting the VLAN Tag in the service data.

The 802.11 n WIFI interface on the slave PLC equipment in the embodiment is in the default mode, and its service data defaults to be the untag service data.

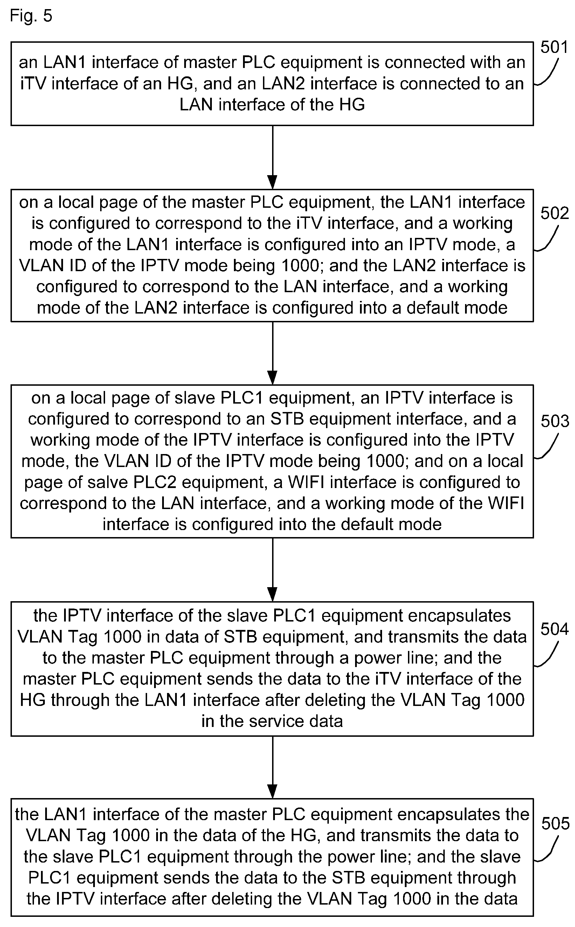

Two pieces of slave PLC equipment are connected to the same master PLC equipment, i.e. slave PLC1 equipment and PLC2 equipment respectively; the slave PLC1 equipment supports an STB equipment interface, and the STB equipment may access the STB equipment interface of the slave PLC1 equipment; the slave PLC2 equipment supports a WIFI interface, and the tablet computer may access a network through the WIFI interface of the PLC2 equipment; and the master PLC equipment includes the LAN1 interface and the LAN2 interface, the LAN1 interface accesses the iTV interface of the HG, and the LAN2 interface accesses the LAN interface of the HG. As shown in Fig. 5, the communication method for the home network in the embodiment of the disclosure includes the following preferred implementation steps:
Step 501: the LAN1 interface of the master PLC equipment is connected with the iTV interface of the HG, and the LAN2 interface is connected to the LAN interface of the HG.
Step 502: on the local page of the master PLC equipment, the LAN1 interface is configured to correspond to the iTV interface, and the working mode of the LAN1 interface is configured into the IPTV mode, the VLAN ID of the IPTV mode being 1000; and the LAN2 interface is configured to correspond to the LAN interface, and the working mode of the LAN2 interface is configured into the default mode.

Preferably, a configured content further includes: the configuration of the interfaces of the master PLC equipment and the slave PLC equipment into mixed interfaces, the mixed interfaces supporting the mixed transmission of Tag 1000 and untag service data.

Step 503: on a local page of the slave PLC1 equipment, the IPTV interface is configured to correspond to the STB equipment interface, and the working mode of the IPTV interface is configured into the IPTV mode, the VLAN ID of the IPTV mode being 1000; and on a local page of the salve PLC2 equipment, the WIFI interface is configured to correspond to the LAN interface, and the working mode of the WIFI interface is configured into the default mode.

Step 504: the IPTV interface of the slave PLC1 equipment encapsulates VLAN Tag 1000 in the data sent from the STB equipment, and transmits the data to the master PLC equipment through the power line; and the master PLC equipment sends the data to the iTV interface of the HG through the LAN1 interface after deleting the VLAN Tag 1000 in the service data.

Step 505: the LAN1 interface of the master PLC equipment encapsulates the VLAN Tag 1000 in the data sent from the HG, and transmits the data to the slave PLC1 equipment through the power line; and the slave PLC1 equipment sends the data to the STB equipment through the IPTV interface after deleting the VLAN Tag 1000 in the data.

In the solutions, the working modes of the master PLC equipment and the slave PLC equipment may further be configured by hardware through buttons on the PLC equipment, and specifically, a hardware button is arranged on the master PLC equipment, and a hardware button is also arranged on the slave PLC equipment; and when the buttons are pressed down, it is necessary to perform VLAN Tag encapsulation or decapsulation on the data received or sent from a specific interface of the slave PLC equipment.

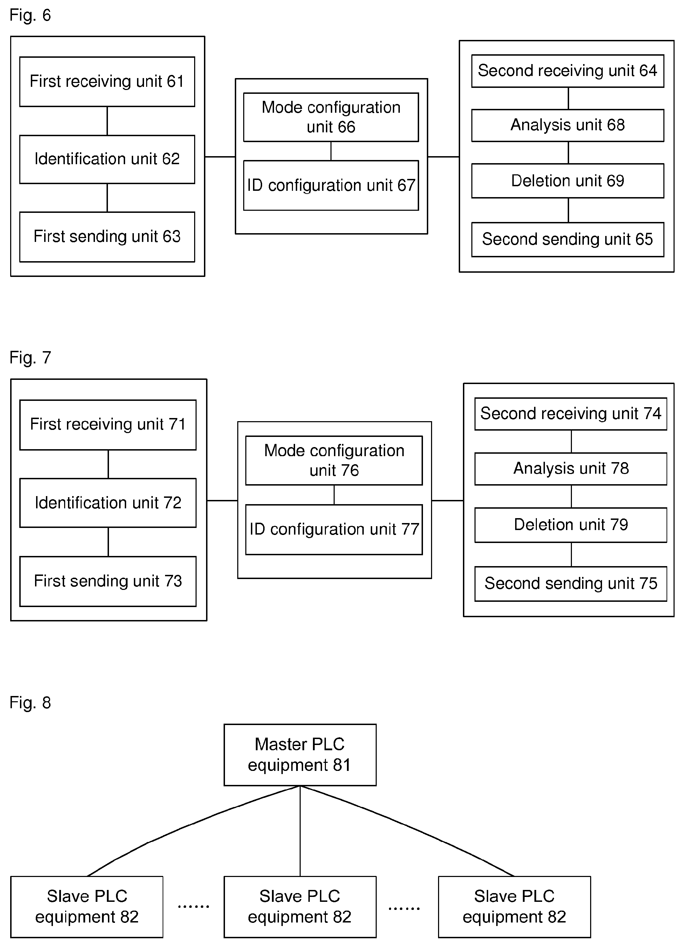

The embodiment of the disclosure further provides PLC equipment applicable to the communication method for the home network, as shown in Fig. 6, the PLC equipment includes: a first receiving unit 61, an identification unit 62, a first sending unit 63, a second receiving unit 64 and a second sending unit 65, wherein
the first receiving unit 61 is configured to receive IPTV service data and/or Internet access service data sent from an HG;
the identification unit 62 is configured to identify the IPTV service data and/or the Internet access service data;
the first sending unit 63 is configured to send the identified IPTV service data and/or Internet access service data to more than one piece of slave PLC equipment;
the second receiving unit 64 is configured to receive IPTV service data and/or Internet access service data sent from the more than one piece of slave PLC equipment; and
the second sending unit 65 is configured to send the IPTV service data to an iTV interface of the HG and send the Internet access service data to an LAN interface of the HG according to (an) ID(s) of the IPTV service data and/or the Internet access service data.

Preferably, on the basis of the PLC equipment shown in Fig. 6, the PLC equipment of the embodiment of the disclosure further includes: a mode configuration unit 66 and an ID configuration unit 67, wherein
the mode configuration unit 66 is configured to configure a working mode of a first LAN interface into an IPTV mode, and
configure a working mode of a second LAN interface into a default mode, or configure the working mode of the second LAN interface into an LAN mode; and
the ID configuration unit 67 is configured to configure a first ID to the IPTV mode when the working mode of the first LAN interface is configured into the IPTV mode, and
configure a second ID to the LAN mode when the working mode of the second LAN interface is configured into the LAN mode.

Preferably, the first receiving unit 61 is further configured to receive the IPTV service data sent from the iTV interface of the HG through the first LAN interface, and receive the Internet access service data sent from the LAN interface of the HG through the second LAN interface; and
the identification unit 62 is further configured to encapsulate the first ID in the IPTV service data when the working mode of the first LAN interface is determined to be the IPTV mode, and
keep the Internet access service data unchanged when the working mode of the second LAN interface is determined to be the default mode, or encapsulate the second ID in the Internet access service data when the working mode of the second LAN interface is determined to be the LAN mode.

Preferably, the PLC equipment further includes: an analysis unit 68 and a deletion unit 69, wherein
the analysis unit 68 is configured to send a first deletion instruction to the deletion unit 69 when the IPTV service data is analyzed and the IPTV service data is determined to contain the first ID, and
trigger the second sending unit 65 when the Internet access service data is analyzed and the Internet access service data is determined not to contain the first ID, or send a second deletion instruction to the deletion unit 69 when the Internet access service data is analyzed and the Internet access service data is determined to contain the second ID;
the deletion unit 69 is configured to delete the first ID in the IPTV service data after receiving the first deletion instruction from the analysis unit 68, and
delete the second ID in the Internet access service data after receiving the second deletion instruction from the analysis unit 68; and
the second sending unit 65 is further configured to send the IPTV service data from which the first ID is deleted to the iTV interface of the HG, and
send the Internet access service data to the LAN interface of the HG after receiving the triggering of the analysis unit 68, or send the Internet access service data from which the second ID is deleted to the LAN interface of the HG.

Those skilled in the art should understand that functions realized by each unit of the PLC equipment shown in Fig. 6 may be understood according to related description about the communication methods for the home network. The functions of each unit in the PLC equipment shown in Fig. 6 may be realized through a program running on a processor, and may further be realized through a specific logic circuit. For example, all of the identification unit 62, the mode configuration unit 66, the ID configuration unit 67, the analysis unit 68 and the deletion unit 69 may be implemented through a Central Processing Unit (CPU), Micro Processing Unit (MPU), Digital Signal Processor (DSP) or Field Programmable Gate Array (FPGA) located in the PLC equipment. The first receiving unit 61, the first sending unit 63, the second receiving unit 64 and the second sending unit 65 may be implemented by transceiver ports in the PLC equipment.

The embodiment of the disclosure further provides PLC equipment applicable to the communication method for the home network, as shown in Fig. 7, the PLC equipment includes: a first receiving unit 71, an identification unit 72, a first sending unit 73, a second receiving unit 74 and a second sending unit 75, wherein
the first receiving unit 71 is configured to receive IPTV service data sent from STB equipment and/or Internet access service data sent from Internet access equipment;
the identification unit 72 is configured to identify the IPTV service data and/or the Internet access service data;
the first sending unit 73 is configured to send the identified IPTV service data and/or Internet access service data to master PLC equipment;
the second receiving unit 74 is configured to receive IPTV service data and/or Internet access service data sent from the master PLC equipment; and
the second sending unit 75 is configured to send the IPTV service data to the STB equipment and send the Internet access service data to the Internet access equipment according to (an) ID(s) of the IPTV service data and/or the Internet access service data.

Preferably, on the basis of the PLC equipment shown in Fig. 7, the PLC equipment of the embodiment of the disclosure further includes: a mode configuration unit 76 and an ID configuration unit 77, wherein
the mode configuration unit 76 is configured to configure a working mode of an STB equipment interface into an IPTV mode, and
configure a working mode of an Internet access equipment interface into a default mode, or configure the working mode of the Internet access equipment interface into an LAN mode; and
the ID configuration unit 77 is configured to configure a first ID to the IPTV mode when the working mode of the STB equipment interface is configured into the IPTV mode, and
configure a second ID to the LAN mode when the working mode of the Internet access equipment interface is configured into the LAN mode.

Preferably, the first receiving unit 71 is further configured to receive the IPTV service data sent from the STB equipment through the STB equipment interface, and receive the Internet access service data sent from the Internet access equipment through the Internet access equipment interface; and
the identification unit 72 is further configured to encapsulate the first ID in the IPTV service data when the working mode of the STB equipment interface is determined to be the IPTV mode, and
keep the Internet access service data unchanged when the working mode of the Internet access equipment interface is determined to be the default mode, or encapsulate the second ID in the Internet access service data when the working mode of the Internet access equipment interface is determined to be the LAN mode.

Preferably, on the basis of the PLC equipment shown in Fig. 7, the PLC equipment of the embodiment of the disclosure further includes: an analysis unit 78 and a deletion unit 79, wherein
the analysis unit 78 is configured to send a first deletion instruction to the deletion unit 79 when the IPTV service data is analyzed and the IPTV service data is determined to contain the first ID, and
trigger the second sending unit 75 when the Internet access service data is analyzed and the Internet access service data is determined not to contain the first ID, or send a second deletion instruction to the deletion unit 79 when the Internet access service data is analyzed and the Internet access service data is determined to contain the second ID;
the deletion unit 79 is configured to delete the first ID in the IPTV service data after receiving the first deletion instruction from the analysis unit 78, and
delete the second ID in the Internet access service data after receiving the second deletion instruction from the analysis unit 78; and
the second sending unit 75 is further configured to send the IPTV service data from which the first ID is deleted to the iTV interface of the HG, and
send the Internet access service data to the LAN interface of the HG after receiving the triggering of the analysis unit 78, or send the Internet access service data from which the second ID is deleted to the LAN interface of the HG.

Those skilled in the art should understand that functions realized by each unit of the PLC equipment shown in Fig. 7 may be understood according to related description about the communication methods for the home network. The functions of each unit in the PLC equipment shown in Fig. 7 may be realized through a program running on a processor, and may further be realized through a specific logic circuit. For example, all of the identification unit 72, the mode configuration unit 76, the ID configuration unit 77, the analysis unit 78 and the deletion unit 79 may be implemented through a CPU, MPU, DSP or FPGA located in the PLC equipment. The first receiving unit 71, the first sending unit 73, the second receiving unit 74 and the second sending unit 75 may be implemented by transceiver ports in the PLC equipment.

The embodiment of the disclosure further provides a communication system for a home network, as shown in Fig. 8, the communication system for the home network includes PLC equipment shown in Fig. 6 and more than one piece of PLC equipment shown in Fig. 7, wherein the PLC equipment shown in Fig. 6 serves as master PLC equipment 81, and the PLC equipment shown in Fig. 7 serves as slave PLC equipment 82.

Those skilled in the art should understand that the functions realized by each unit in the master PLC equipment shown in Fig. 8 may be understood according to the related description about the PLC equipment shown in Fig. 6. The functions of each unit in the slave PLC equipment shown in Fig. 8 may be understood according to the related description about the PLC equipment shown in Fig. 7.

The embodiment of the disclosure further provides a storage medium, in which a computer program is stored, wherein the computer program is configured to execute the communication method for the home network according to each abovementioned embodiment.

The above is only the preferred embodiment of the disclosure and not intended to limit the scope of protection of the disclosure.

### INDUSTRIAL PRACTICABILITY

According to the embodiment of the disclosure, the IPTV service data and/or the Internet access service data in the same physical channel can be logically separated by identifying the IPTV service data and/or the Internet access service data, the amount of the PLC equipment is further reduced, the communication cost of the home network is lowered, and in addition, the home networking flexibility and usability are improved.

## Claims

1. A communication method for a home network, comprising:
identifying received Internet Protocol Television (IPTV) service data and/or Internet access service data sent from a Home gateway (HG), and sending the identified IPTV service data and/or Internet access service data to more than one piece of Power Line Communication (PLC) equipment; and
after IPTV service data and/or Internet access service data sent from the more than one piece of PLC equipment is received, sending the IPTV service data to an Internet Television (iTV) interface of the HG and sending the Internet access service data to a Local Area Network (LAN) interface of the HG according to (an) Identity/Identities (ID) of the IPTV service data and/or the Internet access service data.

2. The communication method for the home network according to claim 1, further comprising: before identifying the received IPTV service data and/or Internet access service data sent from the HG,
configuring a working mode of a first LAN interface into an IPTV mode, and configuring a first ID to the IPTV mode; and
configuring a working mode of a second LAN interface into a default mode; or, configuring the working mode of the second LAN interface into an LAN mode, and configuring a second ID to the LAN mode.

3. The communication method for the home network according to claim 2, wherein the identifying the received IPTV service data and/or Internet access service data sent from the HG comprises:
receiving the IPTV service data sent from the iTV interface of the HG through the first LAN interface, and receiving the Internet access service data sent from the LAN interface of the HG through the second LAN interface;
when the working mode of the first LAN interface is determined to be the IPTV mode, encapsulating the first ID in the IPTV service data; and
when the working mode of the second LAN interface is determined to be the default mode, keeping the Internet access service data unchanged; or, when the working mode of the second LAN interface is determined to be the LAN mode, encapsulating the second ID in the Internet access service data.

4. The communication method for the home network according to claim 3, wherein the sending the IPTV service data to the iTV interface of the HG and sending the Internet access service data to the LAN interface of the HG according to the ID(s) of the IPTV service data and/or the Internet access service data comprises:
when the IPTV service data is analyzed and the IPTV service data is determined to contain the first ID, deleting the first ID in the IPTV service data, and sending the IPTV service data to the iTV interface of the HG; and
when the Internet access service data is analyzed and the Internet access service data is determined not to contain the first ID, sending the Internet access service data to the LAN interface of the HG; or, when the Internet access service data is analyzed and the Internet access service data is determined to contain the second ID, deleting the second ID in the Internet access service data, and sending the Internet access service data to the LAN interface of the HG.

5. A communication method for a home network, comprising:
identifying received Internet Protocol Television (IPTV) service data sent from Set Top Box (STB) equipment and/or received Internet access service data sent from Internet access equipment, and sending the identified IPTV service data and/or Internet access service data to Power Line Communication (PLC) equipment; and
after IPTV service data and/or Internet access service data sent from the PLC equipment is received, sending the IPTV service data to the STB equipment and sending the Internet access service data to the Internet access equipment according to (an) Identity/Identities (ID) of the IPTV service data and/or the Internet access service data.

6. The communication method according to claim 5, further comprising: before identifying the received IPTV service data sent from the STB equipment and/or the received Internet access service data sent from the Internet access equipment,
configuring a working mode of an STB equipment interface into an IPTV mode, and configuring a first ID to the IPTV mode; and
configuring a working mode of an Internet access equipment interface into a default mode; or, configuring the working mode of the Internet access equipment interface into a Local Area Network (LAN) mode, and configuring a second ID to the LAN mode.

7. The communication method according to claim 6, wherein the identifying the received IPTV service data sent from the STB equipment and/or the received Internet access service data sent from the Internet access equipment comprises:
receiving the IPTV service data sent from the STB equipment through the STB equipment interface, and receiving the Internet access service data sent from the Internet access equipment through the Internet access equipment interface;
when the working mode of the STB equipment interface is determined to be the IPTV mode, encapsulating the first ID in the IPTV service data; and
when the working mode of the Internet access equipment interface is determined to be the default mode, keeping the Internet access service data unchanged; or, when the working mode of the Internet access equipment interface is determined to be the LAN mode, encapsulating the second ID in the Internet access service data.

8. The communication method according to claim 7, wherein the sending the IPTV service data to the STB equipment and sending the Internet access service data to the Internet access equipment according to the ID(s) of the IPTV service data and/or the Internet access service data comprises:
when the IPTV service data is analyzed and the IPTV service data is determined to contain the first ID, deleting the first ID in the IPTV service data, and sending the IPTV service data to the STB equipment; and
when the Internet access service data is analyzed and the Internet access service data is determined not to contain the first ID, sending the Internet access service data to the Internet access equipment; or, when the Internet access service data is analyzed and the Internet access service data is determined to contain the second ID, deleting the second ID in the Internet access service data, and sending the Internet access service data to the Internet access equipment.

9. Power Line Communication (PLC) equipment, comprising: a first receiving unit, an identification unit, a first sending unit, a second receiving unit and a second sending unit, wherein
the first receiving unit is configured to receive Internet Protocol Television (IPTV) service data and/or Internet access service data sent from a Home gateway (HG);
the identification unit is configured to identify the IPTV service data and/or the Internet access service data;
the first sending unit is configured to send the identified IPTV service data and/or Internet access service data to more than one piece of slave PLC equipment;
the second receiving unit is configured to receive IPTV service data and/or Internet access service data sent from the more than one piece of slave PLC equipment; and
the second sending unit is configured to send the IPTV service data to an Internet Television (iTV) interface of the HG and send the Internet access service data to a Local Area Network (LAN) interface of the HG according to (an) Identity/Identities (ID) of the IPTV service data and/or the Internet access service data.

10. The PLC equipment according to claim 9, further comprising: a mode configuration unit and an ID configuration unit, wherein
the mode configuration unit is configured to configure a working mode of a first LAN interface into an IPTV mode, and
configure a working mode of a second LAN interface into a default mode, or configure the working mode of the second LAN interface into an LAN mode; and
the ID configuration unit is configured to configure a first ID to the IPTV mode when the working mode of the first LAN interface is configured into the IPTV mode, and
configure a second ID to the LAN mode when the working mode of the second LAN interface is configured into the LAN mode.

11. The PLC equipment according to claim 10, wherein
the first receiving unit is further configured to receive the IPTV service data sent from the iTV interface of the HG through the first LAN interface, and receive the Internet access service data sent from the LAN interface of the HG through the second LAN interface; and
the identification unit is further configured to encapsulate the first ID in the IPTV service data when the working mode of the first LAN interface is determined to be the IPTV mode, and
keep the Internet access service data unchanged when the working mode of the second LAN interface is determined to be the default mode, or encapsulate the second ID in the Internet access service data when the working mode of the second LAN interface is determined to be the LAN mode.

12. The PLC equipment according to claim 11, further comprising: an analysis unit and a deletion unit, wherein
the analysis unit is configured to send a first deletion instruction to the deletion unit when the IPTV service data is analyzed and the IPTV service data is determined to contain the first ID, and
trigger the second sending unit when the Internet access service data is analyzed and the Internet access service data is determined not to contain the first ID, or send a second deletion instruction to the deletion unit when the Internet access service data is analyzed and the Internet access service data is determined to contain the second ID;
the deletion unit is configured to delete the first ID in the IPTV service data after receiving the first deletion instruction from the analysis unit, and
delete the second ID in the Internet access service data after receiving the second deletion instruction from the analysis unit; and
the second sending unit is further configured to send the IPTV service data from which the first ID is deleted to the iTV interface of the HG, and
send the Internet access service data to the LAN interface of the HG after receiving the triggering of the analysis unit, or send the Internet access service data from which the second ID is deleted to the LAN interface of the HG.

13. Power Line Communication (PLC) equipment, comprising: a first receiving unit, an identification unit, a first sending unit, a second receiving unit and a second sending unit, wherein
the first receiving unit is configured to receive Internet Protocol Television (IPTV) service data sent from Set Top Box (STB) equipment and/or Internet access service data sent from Internet access equipment;
the identification unit is configured to identify the IPTV service data and/or the Internet access service data;
the first sending unit is configured to send the identified IPTV service data and/or Internet access service data to master PLC equipment;
the second receiving unit is configured to receive IPTV service data and/or Internet access service data sent from the master PLC equipment; and
the second sending unit is configured to send the IPTV service data to the STB equipment and send the Internet access service data to the Internet access equipment according to (an) Identity/Identities (ID) of the IPTV service data and/or the Internet access service data.

14. The PLC equipment according to claim 13, further comprising: a mode configuration unit and an ID configuration unit, wherein
the mode configuration unit is configured to configure a working mode of an STB equipment interface into an IPTV mode, and
configure a working mode of an Internet access equipment interface into a default mode, or configure the working mode of the Internet access equipment interface into a Local Area Network (LAN) mode; and
the ID configuration unit is configured to configure a first ID to the IPTV mode when the working mode of the STB equipment interface is configured into the IPTV mode, and
configure a second ID to the LAN mode when the working mode of the Internet access equipment interface is configured into the LAN mode.

15. The PLC equipment according to claim 14, wherein
the first receiving unit is further configured to receive the IPTV service data sent from the STB equipment through the STB equipment interface, and receive the Internet access service data sent from the Internet access equipment through the Internet access equipment interface; and
the identification unit is further configured to encapsulate the first ID in the IPTV service data when the working mode of the STB equipment interface is determined to be the IPTV mode, and
keep the Internet access service data unchanged when the working mode of the Internet access equipment interface is determined to be the default mode, or encapsulate the second ID in the Internet access service data when the working mode of the Internet access equipment interface is determined to be the LAN mode.

16. The PLC equipment according to claim 15, further comprising: an analysis unit and a deletion unit, wherein
the analysis unit is configured to send a first deletion instruction to the deletion unit when the IPTV service data is analyzed and the IPTV service data is determined to contain the first ID, and
trigger the second sending unit when the Internet access service data is analyzed and the Internet access service data is determined not to contain the first ID, or send a second deletion instruction to the deletion unit when the Internet access service data is analyzed and the Internet access service data is determined to contain the second ID;
the deletion unit is configured to delete the first ID in the IPTV service data after receiving the first deletion instruction from the analysis unit, and
delete the second ID in the Internet access service data after receiving the second deletion instruction from the analysis unit; and
the second sending unit is further configured to send the IPTV service data from which the first ID is deleted to the iTV interface of the HG, and
send the Internet access service data to the LAN interface of the HG after receiving the triggering of the analysis unit, or send the Internet access service data from which the second ID is deleted to the LAN interface of the HG.

17. A communication system for a home network, comprising the PLC equipment according to any one of claims 9 to 12 and at least one piece of PLC equipment according to any one of claims 13 to 16.

18. A storage medium, in which a computer program is stored, wherein the computer program is configured to execute the communication method for the home network according to any one of claims 1 to 4 or the communication method for the home network according to any one of claims 5 to 8.
